# EUROPEAN PATENT APPLICATION

(11) **EP 1 782 988 A1**
(43) Date of publication of application: **09.05.2007**
(21) Application number: 05425775.3
(22) Date of filing: 04.11.2005
(51) Int. Cl.: B60K 6/04

(54) **Hybrid-drive vehicle**

(71) Applicant: MAGNETI MARELLI POWERTRAIN S.p.A., 20011 Corbetta (MI) (IT)
(72) Inventor: Seminara, Massimo, 95037 San Giovanni La Punta (IT); Raimondi, Marco, 41013 Castelfranco Emilia (IT)
(74) Representative: D'Angelo, Fabio

(57) **Abstract**

A hybrid-drive vehicle (1) having a pair of drive wheels (3); a combustion engine (5) having a drive shaft (6); a first electric motor-generator (8) having a first shaft (7) connected mechanically to the drive shaft (6) of the combustion engine (5); a second electric motor-generator (11) having a second shaft (10); and an electric power supply device (14) connected electrically to the two electric motor-generators (8, 11) and having a storage device (15); the first shaft (7) of the first electric motor-generator (8) is connected at one end to the drive shaft (6) of the combustion engine (5), and is connected at the opposite end to the drive wheels (3) with a fixed, non-adjustable velocity ratio.

## Description

### TECHNICAL FIELD

The present invention relates to a hybrid-drive vehicle.

A hybrid-drive vehicle is one with at least a combustion engine (normally an internal combustion engine) and at least an electric motor, and can normally be run using the electric motor only (low performance and endurance, but zero pollutant emissions), using the combustion engine only (high performance and endurance, but significant pollutant emissions), or using both.

### BACKGROUND ART

Hybrid vehicles are known which operate in "parallel" mode, in which the internal combustion engine is connected mechanically to a reversible electric motor-generator and to the drive wheels to transmit drive torque to the drive wheels directly. When the internal combustion engine transmits drive torque directly to the drive wheels, the reversible electric motor-generator can be turned off, may be operated as a generator to charge a storage device, or may be operated (for short periods of time) as a motor to provide additional power for high-performance acceleration (maximum performance in racing mode) .

A "parallel" mode hybrid vehicle, however, requires a mechanical or electromechanical velocity ratio variation system between the combustion engine and the drive wheels, which means an increase in axial size, complicates construction, and may result in discontinuous drive torque transmission to the drive wheels when shifting gear. "Parallel" mode hybrid vehicles normally also require an additional electric motor-generator to start the combustion engine.

Hybrid vehicles are also known which operate in "series" mode, in which the internal combustion engine is connected mechanically to a first reversible electric motor-generator, and the drive wheels are connected mechanically to a second reversible electric motor-generator connected electrically to the first reversible electric motor-generator. In actual use, the combustion engine drives the first reversible electric motor-generator, which generates electric energy to drive the second reversible electric motor-generator and so transmit drive torque to the drive wheels.

In this case, no velocity ratio variation system is required between the combustion engine and the drive wheels, on account of the combustion engine and the drive wheels never being connected mechanically. On the other hand, at certain operating points, the efficiency of "series" mode hybrid vehicles is impaired by the dual power conversion from mechanical to electric and from electric to mechanical.

One example of a hybrid vehicle is described in Patent Application WO0063041A1, in which the hybrid drive system comprises an internal combustion engine having a drive shaft connected to an input shaft of an automatic transmission with the interposition of a first clutch; the shaft of a first electric motor is connected permanently to the input shaft of the automatic transmission; and the shaft of a second electric motor is connected to the drive shaft with the interposition of a second clutch.

### DISCLOSURE OF INVENTION

It is an object of the present invention to provide a hybrid-drive vehicle designed to eliminate the aforementioned drawbacks, and which is cheap and easy to produce.

According to the present invention, there is provided a hybrid-drive vehicle as recited in the accompanying Claims.

### BRIEF DESCRIPTION OF THE DRAWINGS

A non-limiting embodiment of the present invention will be described by way of example with reference to the accompanying drawings, in which:
Figure 1 shows a schematic view of a hybrid-drive vehicle in accordance with the present invention;
Figure 2 shows a graph illustrating operation of the Figure 1 vehicle power train system as a function of drive torque at the drive wheels, and as a function of vehicle speed.

### PREFERRED EMBODIMENT OF THE INVENTION

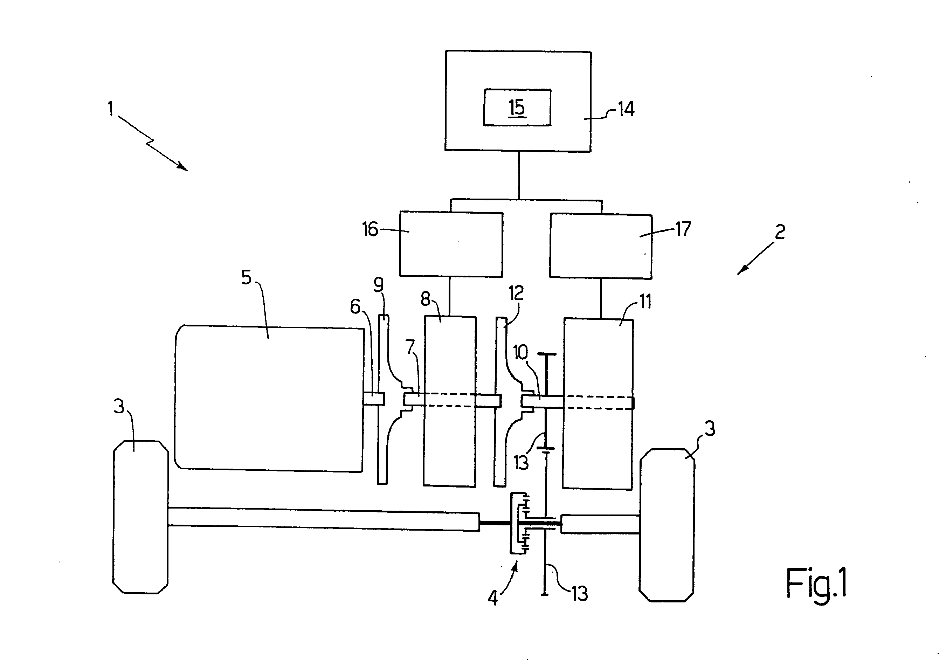

Number 1 in Figure 1 indicates as a whole a hybrid-drive vehicle comprising a power train system 2 for applying a drive torque to two drive wheels 3 via a differential 4.

Power train system 2 comprises a combustion engine 5 (in particular, an internal combustion engine or ICE) having a shaft 6 connected mechanically to a shaft 7 of a reversible electric motor-generator (EMG) 8 via a decoupling system defined by a clutch (CL) 9. Shaft 7 of reversible electric motor-generator 8 is also connected mechanically to a shaft 10 of a reversible electric motor-generator 11 via a decoupling system defined by a clutch 12. In other words, reversible electric motor-generator 8 is located between combustion engine 5 and reversible electric motor-generator 11, and shaft 7 of reversible electric motor-generator 8 is fitted at one end to clutch 9, and at the opposite end to clutch 12.

Shaft 10 of reversible electric motor-generator 11 is connected permanently, with a fixed velocity ratio, to an input of differential 4 to transmit power to drive wheels 3. More specifically, shaft 10 of reversible electric motor-generator 11 is connected to the input of differential 4 by cascade gears 13.

In an alternative embodiment not shown, one of clutches 9 and 12 is eliminated. In other words, clutch 9 may be eliminated, in which case, shaft 6 of combustion engine 5 is connected permanently to shaft 7 of reversible electric motor-generator 8; or clutch 12 may be eliminated, in which case, shaft 7 of reversible electric motor-generator 8 is permanently connected to shaft 10 of reversible electric motor-generator 11.

In an alternative embodiment, one of electric motor-generators 8 and 11 is not reversible. In other words, electric motor-generator 8 may be a non-reversible generator, or electric motor-generator 11 may be a non-reversible motor.

Power train system 2 comprises a power supply device 14 for supplying electric energy, and which comprises an electric energy storage device 15 (typically a pack of batteries). In some embodiments, power supply device 14 may also comprise an electric generator. Reversible electric motor-generator 8 is connected electrically to power supply device 14 by an electric energy converter 16, and reversible electric motor-generator 11 is connected electrically to power supply device 14 by an electric energy converter 17. Converters 16 and 17 provide for connecting power supply device 14 electrically to reversible electric motor-generators 8 and 11.

It is important to note that the flywheel of combustion engine 5 may be very small or even eliminated, on account of the flywheel function being performed by the rotor of reversible electric motor-generator 8 when clutch 9 is engaged.

In an alternative embodiment not shown, combustion engine 5 and reversible electric motor-generator 8 are connected mechanically to (e.g. front) drive wheels 3, reversible electric motor-generator 11 is connected mechanically to the other (e.g. rear) drive wheels, and clutch 12 is obviously eliminated.

Vehicle 1 can be run with various operating modes of power train system 2, by both adjusting the position of clutches 9 and 12, and operating reversible electric motor-generators 8 and 11 as motors or generators.

In a thermal operating mode, clutches 9 and 12 are engaged, and power train system 2 only employs combustion engine 5 to produce drive torque for drive wheels 3, while reversible electric motor-generators 8 and 11 are deenergized or used as generators to charge storage device 15 of power supply device 14. For short periods of time, at least one of reversible electric motor-generators 8, 11 may be used as a motor to provide additional drive torque, which is added to the drive torque generated by combustion engine 5 for high-performance acceleration (maximum performance in racing mode). In the latter case, when drive torque for drive wheels 3 is provided by both combustion engine 5 and reversible electric motor-generators 8 and 11, the system operates in "parallel" hybrid mode.

In an electric operating mode, combustion engine 5 is turned off and disconnected from drive wheels 3 (clutch 9 and/or clutch 12 released), and drive torque for drive wheels 3 is generated solely by at east one of reversible electric motor-generators 8, 11, which are powered by the electric energy stored in storage device 15 of power supply device 14. It is important to note that clutch 9 enables both reversible electric motor-generators 8 and 11 to be used to generate drive torque for drive wheels 3 in electric operating mode, when the operating conditions of vehicle 1 call for high drive torque (e.g. at start-up).

In a "series" hybrid operating mode, combustion engine 5 is turned on, is disconnected from drive wheels 3 (clutch 9 engaged and clutch 12 released), and drives reversible electric motor-generator 8, which acts as an electric generator; and the electric energy generated by reversible electric motor-generator 8 is supplied by power supply device 14 to reversible electric motor-generator 11, which functions as a motor and generates drive torque for drive wheels 3.

In "series" hybrid operating mode, combustion engine 5 runs at substantially constant speed, and is controlled "at a fixed optimum point", by not being connected mechanically to drive wheels 3; whereas, in "parallel" hybrid and in thermal operating mode, combustion engine 5 runs at variable speed, and is controlled dynamically, by being connected mechanically to drive wheels 3. Running combustion engine 5 at substantially constant speed and controlling it "at a fixed optimum point" eliminate the dynamic operating flaws typical of a low-drive-torque combustion engine.

In all the above operating modes, when decelerating, reversible electric motor-generators 8, 11 may obviously be used as generators for regenerative braking. In other words, the brake torque is used by reversible electric motor-generators 8, 11 to generate electric energy, which is stored in storage device 15 of power supply device 14. Obviously, regenerative braking is only possible providing storage device 15 of power supply device 14 is not already fully charged, i.e. can store further electric energy.

Combustion engine 5 is typically started by engaging clutch 9, releasing clutch 12, and using reversible electric motor-generator 8 as a starting motor. When starting combustion engine 5, vehicle 1 may be stationary, or may be moving, driven by reversible electric motor-generator 11.

Start-up of vehicle 1, i.e. from the stationary condition, is normally performed first in electric operating mode to accelerate vehicle 1 (using reversible electric motor-generator 11 alone, or both reversible electric motor-generators 8 and 11) up to an operating condition in which power by combustion engine 5 is necessary or convenient; at which point, combustion engine 5 may be started by engaging clutch 9, releasing clutch 12, and using reversible electric motor-generator 8 as a starting motor. When starting combustion engine 5, the drive torque generated by reversible electric motor-generator 8 is cut off from drive wheels 3, and may be compensated by temporarily overloading reversible electric motor-generator 11.

The above operating modes are selected according to driver preference (e.g. the driver may opt for electric operating mode when driving through a historic town centre with traffic restrictions); according to the charge of storage device 15 of power supply device 14; and according to the running condition of vehicle 1. Obviously, if storage device 15 of power supply device 14 is run down, electric operating mode is not an option, combustion engine 5 must be operated, and at least one of reversible electric motor-generators 8, 11 must be operated as a generator to charge storage device 15.

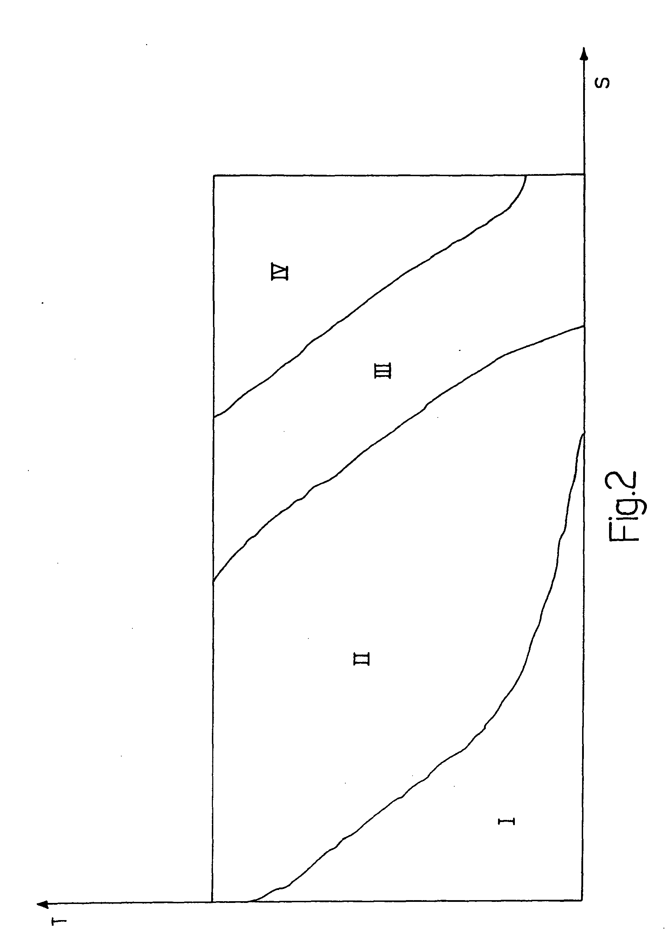

One example of operating mode selection according to the running condition of vehicle 1 is shown in the Figure 2 graph, in which the y axis shows the speed of vehicle 1, and the x axis the drive torque at drive wheels 3. The torque at drive wheels 3/vehicle 1 speed area is divided into four regions indicated I-IV : region I relates to electric operating mode; region II to "series" hybrid operating mode; region III to "parallel" hybrid operating mode; and region IV to thermal operating mode.

In other words, at low power, electric operating mode (region I) is preferred; at medium-low power, "series" hybrid operating mode (region II) is preferred; at medium-high power, "parallel" hybrid operating mode (region III) is preferred; and, at high power, thermal operating mode (region IV) is preferred.

In a preferred embodiment, the borders between regions I-IV may vary according to a number of parameters, such as the charge of storage device 15 of power supply device 14.

All the operating modes of power train system 2 are summarized in the Table below, in which, ICE indicates combustion engine 5, CL9 indicates clutch 9, CL12 indicates clutch 12, EMG8 indicates reversible electric motor-generator 8, and EMG11 indicates reversible electric motor-generator 11. Combustion engine 5 may assume a state 0 corresponding to combustion engine 5 turned off, or a state 1 corresponding to combustion engine 5 running. Each clutch 9, 12 may assume a state 0 corresponding to clutch 9, 12 released, or a state 1 corresponding to clutch 9, 12 engaged. Each reversible electric motor-generator 8, 11 may assume a state -1 corresponding to reversible electric motor-generator 8, 11 operating as a generator; a state 0 corresponding to reversible electric motor-generator 8, 11 deactivated; a state 1 corresponding to reversible electric motor-generator 8, 11 operating as a motor in nominal condition; and a state 2 corresponding to reversible electric motor-generator 8, 11 operating as a motor in the overload condition (which is compulsory for short periods of time).

| **ICE** | **CL9** | **EMG8** | **CL12** | **EMG11** | **Description** | **Operating mode** |
|---|---|---|---|---|---|---|
| 0 | 0 | 0 | 0 | -1 | Regenerative braking | Parallel hybrid |
| 0 | 0 | 0 | 0 | 0 | Neutral | - |
| 0 | 0 | 0 | 0 | 1 | Electric drive | Parallel hybrid |
| 0 | 0 | 0 | 0 | 2 | Electric drive | Parallel hybrid |
| 0 | 0 | -1 | 1 | -1 | Regenerative braking | Parallel hybrid |
| 0 | 0 | -1 | 1 | 0 | Regenerative braking | Parallel hybrid |
| 0 | 0 | 1 | 1 | 1 | Cruising | Electric |
| 0 | 0 | 1 | 1 | 2 | Cruising | Electric |
| 0 | 0 | 2 | 1 | 1 | Cruising | Electric |
| 0 | 0 | 2 | 1 | 2 | Cruising | Electric |
| 0 | 1 | 1 | 0 | 2 | Start-up | - |
| 0 | 1 | 2 | 0 | 2 | Cold start-up | - |
| 0 | 1 | 2 | 0 | 1 | Cold start-up | - |
| 0 | 1 | 1 | 0 | 1 | Start-up | - |
| 1 | 1 | 1 | 1 | 1 | Cruising | Parallel hybrid |
| 1 | 1 | -1 | 0 | 1 | Cruising | Series hybrid |
| 1 | 1 | -1 | 0 | 2 | Cruising | Series hybrid |
| 1 | 1 | 0 | 1 | 0 | Cruising | Thermal |

Vehicle 1 as described above has numerous advantages. Power train system 2 is extremely compact, by having no mechanical or electromechanical velocity ratio variation system connected to combustion engine 5, thus not only simplifying the system mechanically, but also eliminating the necessity of controlling the velocity ratio variation system. It should be stressed that reducing the axial size of power train system 2 is extremely important in the case of vehicles with a transverse combustion engine 5.

Moreover, power train system 2 can be operated in different modes, which can be selected to optimize performance and efficiency in any condition. For example, at low-medium speed and low-medium torque, combustion engine 5 operates at constant speed independent of the speed of vehicle 1, and therefore with a high degree of efficiency and a low level of pollutant emissions ("series" operating mode), whereas, at high speed and high torque, combustion engine 5 supplies drive torque directly to drive wheels 3, with no dual mechanical-electric, electric-mechanical power conversion ("parallel" and thermal operating mode).

The required drive torque is transmitted at all times to drive wheels 3, without even a short break, thus greatly improving driving comfort. This is achieved by reversible electric motor-generator 11 being permanently connectable to drive wheels 3 to maintain a continuous ground-transmitted torque. In certain conditions (e.g. when turning on combustion engine 5), the overloading capability of reversible electric motor-generator 11 may also be exploited.

Using two electric motor-generators 8 and 11 makes other combustion engine 5 ignition systems unnecessary, and with no adverse effect on driving comfort.

## Claims

1. A hybrid-drive vehicle (1) comprising:
at least one pair of drive wheels (3);
a combustion engine (5) having a drive shaft (6);
a first electric motor-generator (8) having a first shaft (7) connected mechanically to the drive shaft (6) of the combustion engine (5);
a second electric motor-generator (11) having a second shaft (10);
an electric power supply device (14) connected electrically to the two electric motor-generators (8, 11) and having a storage device (15); and
a first clutch (9) interposed between the first shaft (7) of the first electric motor-generator (8) and the drive shaft (6) of the combustion engine (5);
the hybrid-drive vehicle (1) being **characterized in that** the first shaft (7) of the first electric motor-generator (8) is connected at one end to the drive shaft (6) of the combustion engine (5), and is connected at the opposite end to the drive wheels (3) with a fixed, non-adjustable velocity ratio.

2. A hybrid-drive vehicle (1) as claimed in Claim 1, wherein at least one of the two electric motor-generators (8, 11) is reversible, and can operate as both a motor and a generator.

3. A hybrid-drive vehicle (1) as claimed in Claim 1, wherein both the electric motor-generators (8, 11) are reversible, and can operate as both a motor and a generator.

4. A hybrid-drive vehicle (1) as claimed in Claim 1, 2 or 3, wherein the first shaft (7) of the first electric motor-generator (8) is connected to the second shaft (10) of the second electric motor-generator (11), and the second shaft (10) of the second electric motor-generator (11) is connected to the drive wheels (3) with a fixed, non-adjustable velocity ratio.

5. A hybrid-drive vehicle (1) as claimed in Claim 4, wherein a second clutch (12) is interposed between the first shaft (7) of the first electric motor-generator (8) and the second shaft (10) of the second electric motor-generator (11).

6. A hybrid-drive vehicle (1) as claimed in Claim 5, wherein the combustion engine (5) is started by engaging the first clutch (9), releasing the second clutch (12), and using the first electric motor-generator (8) as a starting motor.

7. A hybrid-drive vehicle (1) as claimed in Claim 5 or 6, wherein, in normal conditions, the vehicle (1) is started up by first using an electric operating mode to accelerate the vehicle (1) to a speed compatible with the speed of the combustion engine (5), and by only starting the combustion engine (5) when the vehicle (1) reaches a speed compatible with the speed of the combustion engine (5).

8. A hybrid-drive vehicle (1) as claimed in Claim 7, wherein the combustion engine (5) is started by engaging the first clutch (9), releasing the second clutch (12), and using the first electric motor-generator (8) as a starting motor.

9. A hybrid-drive vehicle (1) as claimed in Claim 8, wherein, when starting up the combustion engine (5), the second electric motor-generator (11) is temporarily overloaded to compensate for the lack of drive torque generated by the first electric motor-generator (8).

10. A hybrid-drive vehicle (1) as claimed in one of Claims 5 to 9, and comprising:
a thermal operating mode, wherein the two clutches (9, 12) are engaged, and the combustion engine (5) is turned on to produce drive torque for the drive wheels (3) ;
a "parallel" hybrid operating mode, wherein the two clutches (9, 12) are engaged, the combustion engine (5) is turned on to produce drive torque for the drive wheels (3), and at least one of the two electric motor-generators (8, 11) operates as a motor or generator;
an electric operating mode, wherein the first clutch (9) is released, the combustion engine (5) is turned off, and drive torque for the drive wheels (3) is generated solely by at least one of the two electric motor-generators (8, 11);
a "series" hybrid operating mode, wherein the first clutch (9) is engaged, the second clutch (12) is released, the combustion engine (5) is turned on and drives the first electric motor-generator (8), which operates as an electric power generator, and the second electric motor-generator (11) operates as a motor and generates drive torque for the drive wheels (3).

11. A hybrid-drive vehicle (1) as claimed in Claim 10, wherein, in "series" hybrid operating mode, the combustion engine (5) operates at substantially constant speed, and is "fixed-point" controlled, whereas, in "parallel" hybrid operating mode and thermal operating mode, the combustion engine (5) operates at variable speed and is controlled dynamically.

12. A hybrid-drive vehicle (1) as claimed in Claim 10 or 11, wherein the operating modes are selected according to driver preference, according to the charge of the storage device (15) of the power supply device (14), and according to the running characteristics of the vehicle (1).

13. A hybrid-drive vehicle (1) as claimed in Claim 12, wherein electric operating mode is preferred at low power, "series" hybrid operating mode is preferred at medium-low power, "parallel" hybrid operating mode is preferred at medium-high power, and thermal operating mode is preferred at high power.

14. A hybrid-drive vehicle (1) as claimed in Claim 1, and comprising a first pair of drive wheels (3) connected mechanically to the combustion engine (5) and to the first electric motor-generator (8); and a second pair of drive wheels connected mechanically to the second electric motor-generator (11).

## Amended claims

### Amended claims in accordance with Rule 86(2) EPC.

**1.** A hybrid-drive vehicle (1) comprising:
at least one pair of drive wheels (3);
a combustion engine (5) having a drive shaft (6);
a first electric machine (8) having a first fixed stator and a single rotating first shaft (7), which is connected at one end to the drive shaft (6) of the combustion engine (5), and is connected detachably at the opposite end to the drive wheels (3) with a fixed, non-adjustable velocity ratio by mechanical connecting means (13);
an electric power supply device (14) connected electrically to the two electric machines (8, 11) and having a storage device (15); and
a first clutch (12), which is interposed between the first shaft (7) of the first electric machine (8) and the connecting means (13) for detaching the first shaft (7) of the first electric machine (8) from the drive wheels (3) and is arranged between the first shaft (7) of the first electric machine (8) and the connecting means (13);
the hybrid-drive vehicle (1) is **characterized in** comprising a second electric machine (11) having a fixed second stator and a single rotating second shaft (10), which is connected permanently to the drive wheels (3) with a fixed, non-adjustable velocity ratio.

**2.** A hybrid-drive vehicle (1) as claimed in Claim 1, wherein at least one of the two electric machines (8, 11) is reversible, and can operate as both a motor and a generator.

**3.** A hybrid-drive vehicle (1) as claimed in Claim 1, wherein both the electric machines (8, 11) are reversible, and can operate as both a motor and a generator.

**4.** A hybrid-drive vehicle (1) as claimed in Claim 1, 2 or 3, wherein the first shaft (7) of the first electric machine (8) is connected to the second shaft (10) of the second electric machine (11) by means of the first clutch (12); the connecting means (13) are coupled to the second shaft (10) of the second electric machine (11).

**5.** A hybrid-drive vehicle (1) as claimed in one of Claims 1 to 4, wherein a second clutch (9) is interposed between the first shaft (7) of the first electric machine (8) and the drive shaft (6) of the combustion engine (5) and is arranged between the first electric machine (8) and the combustion engine (5).

**6.** A hybrid-drive vehicle (1) as claimed in Claim 5, wherein the combustion engine (5) is started by engaging the second clutch (9), releasing the first clutch (12), and using the first electric machine (8) as a starting motor.

**7.** A hybrid-drive vehicle (1) as claimed in Claim 5 or 6, wherein, in normal conditions, the vehicle (1) is started up by first using an electric operating mode to accelerate the vehicle (1) to a speed compatible with the speed of the combustion engine (5), and by only starting the combustion engine (5) when the vehicle (1) reaches a speed compatible with the speed of the combustion engine (5).

**8.** A hybrid-drive vehicle (1) as claimed in Claim 7, wherein the combustion engine (5) is started by engaging the second clutch (9), releasing the first clutch (12), and using the first electric machine (8) as a starting motor.

**9.** A hybrid-drive vehicle (1) as claimed in Claim 8, wherein, when starting up the combustion engine (5), the second electric machine (11) is temporarily overloaded to compensate for the lack of drive torque generated by the first electric machine (8).

**10.** A hybrid-drive vehicle (1) as claimed in one of Claims 5 to 9, and comprising:
a thermal operating mode, wherein the two clutches (9, 12) are engaged, and the combustion engine (5) is turned on to produce drive torque for the drive wheels (3) ;
a "parallel" hybrid operating mode, wherein the two clutches (9, 12) are engaged, the combustion engine (5) is turned on to produce drive torque for the drive wheels (3), and at least one of the two electric machines (8, 11) operates as a motor or generator;
an electric operating mode, wherein the second clutch (9) is released, the combustion engine (5) is turned off, and drive torque for the drive wheels (3) is generated solely by at least one of the two electric machines (8, 11);
a "series" hybrid operating mode, wherein the second clutch (9) is engaged, the first clutch (12) is released, the combustion engine (5) is turned on and drives the first electric machine (8), which operates as an electric power generator, and the second electric machine (11) operates as a motor and generates drive torque for the drive wheels (3).

**11.** A hybrid-drive vehicle (1) as claimed in Claim 10, wherein, in "series" hybrid operating mode, the combustion engine (5) operates at substantially constant speed, and is "fixed-point" controlled, whereas, in "parallel" hybrid operating mode and thermal operating mode, the combustion engine (5) operates at variable speed and is controlled dynamically.

**12.** A hybrid-drive vehicle (1) as claimed in Claim 10 or 11, wherein the operating modes are selected according to driver preference, according to the charge of the storage device (15) of the power supply device (14), and according to the running characteristics of the vehicle (1).

**13.** A hybrid-drive vehicle (1) as claimed in Claim 12, wherein electric operating mode is preferred at low power, "series" hybrid operating mode is preferred at medium-low power, "parallel" hybrid operating mode is preferred at medium-high power, and thermal operating mode is preferred at high power.

**14.** A hybrid-drive vehicle (1) as claimed in Claim 1, and comprising a first pair of drive wheels (3) connected mechanically to the combustion engine (5) and to the first electric machine (8); and a second pair of drive wheels connected mechanically to the second electric machine (11).
